# EUROPÄISCHE PATENTSCHRIFT

(11) **EP 3 922 538 B1**
(45) Veröffentlichungstag und Bekanntmachung des Hinweises auf die Patenterteilung: **02.11.2022**
(21) Anmeldenummer: 21178083.8
(22) Anmeldetag: 07.06.2021
(51) Int. Cl.: B62H 1/02, B62K 19/30, B62K 25/02

(54) **FAHRRADSTÄNDERANORDNUNG, UND FAHRRADSTÄNDER**
BICYCLE STAND ASSEMBLY AND BICYCLE STANDS
AGENCEMENT DE SUPPORT DE BICYCLETTE ET SUPPORT DE BICYCLETTE

(30) Priorität: 08.06.2020 DE 202020103288 U
(43) Veröffentlichungstag der Anmeldung: 15.12.2021
(73) Patentinhaber: Hebie GmbH & Co. KG, 33617 Bielefeld (DE)
(72) Erfinder: SCHREIBER, Bodo, 34513 Waldeck (DE)
(74) Vertreter: Habbel, Ludwig

(56) Entgegenhaltungen:
- DE-U1-202004 019 521
- DE-U1-202006 009 295
- DE-U1-202012 102 630
- DE-U1-202019 106 784

## Beschreibung

Die Neuerung betrifft eine Fahrradständeranordnung, sowie einen Fahrradständer, der zur Schaffung einer solchen Anordnung geeignet ist.

Aus der DE 20 2012 102 630 U1, die als am nächsten kommender Stand der Technik angesehen wird, sowie aus der EP 1 067 042 B1 ist jeweils eine Fahrradständeranordnung bekannt, bei welcher der Fahrradständer im Bereich des Hinterrades am Fahrradrahmen montiert und durch die Verwendung von zwei Schrauben verdrehsicher und bei Bedarf lösbar am Fahrradrahmen festgelegt wird. Zu diesem Zweck ist am Fahrradrahmen ein Befestigungssockel als rahmenfestes Befestigungselement vorgesehen, das die beiden Gewindebohrungen aufweist, die zur Aufnahme der beiden Schrauben dienen. Die dazu verwendete Befestigungsgeometrie sieht beispielsweise eine rechteckige Platte vor, welche die beiden Gewindebohrungen aufweist und an den Fahrradrahmen geschweißt oder gelötet wird. Das dazu komplementäre Gegenstück am Ständerkopf weist eine Nut auf, deren Nutgrund zur Anlage an der Platte vorgesehen ist und deren beiden gegenüberliegenden Nut-Ufer die rahmenseitige Platte umgreifen. Abgesehen von der Festlegung mittels der beiden Schrauben ermöglicht insbesondere dieser Formschluss zwischen dem Ständerkopf und dem Befestigungssockel eine möglichst spielfreie und verdrehsichere Montage des Ständers am Rahmen.

Aus der DE 20 2006 009 295 U1 ist eine Fahrradständeranordnung bekannt, bei welcher der Ständerkopf am Ausfallende eines Fahrradrahmens befestigt wird. Die Befestigungsgeometrie sieht eine rechteckige, plane Anlagefläche am Ständerkopf vor, mit einer ebenfalls rechteckigen, planen Anlagefläche, die in einer Vertiefung des Ausfallendes vorgesehen ist. Die Montage des Ständerkopfes am Fahrradrahmen erfolgt auch hier mithilfe von Schrauben, wobei in dem Ausfallende und im Ständerkopf jeweils Durchgangsbohrungen vorgesehen sind und die Gewindebohrungen, mit denen die Schrauben zusammenwirken, mittels einer separaten Gewindeplatte bereitgestellt werden.

Aus der DE 20 2019 106 784 U1 ist eine Fahrradständeranordnung bekannt, bei welcher die Befestigungsgeometrie eine oder mehrere Anlageflächen am Rahmen aufweist, die jeweils mit einer Anlagefläche am Ständerkopf zusammenwirken, wobei eine einzige, ebene Anlagefläche am Rahmen vorgesehen sein kann oder zwei rahmenseitige Anlageflächen in einer gemeinsamen Ebene oder in zwei Ebenen liegen können. Die Montage des Ständerkopfes am Fahrradrahmen erfolgt auch hier mithilfe von Schrauben, Nieten oder dergleichen.

Aus der DE 20 2004 019 521 U1 ist eine Fahrradständeranordnung bekannt, bei welcher die Befestigungsgeometrie zwei plane Anlageflächen einerseits am Ausfallende eines Fahrradrahmens und andererseits am Stützenkopf einer Fahrrad-Seitenstütze aufweist. Die Montage des Ständerkopfes am Fahrradrahmen erfolgt auch hier mithilfe von Schrauben.

Bei der Herstellung von Fahrrädern werden die Fahrradrahmen werkseitig in großer Stückzahl bereitgestellt, ohne dass die endgültige, durch den Endkunden gewünschte Konfiguration des Fahrrades bekannt ist. Kunden, die beispielsweise keinen Fahrradständer benötigen oder aus ästhetischen Gründen auf einen Fahrradständer verzichten wollen, oder Kunden, die an Stelle eines Hinterradständers einen Mittelständer bevorzugen, der hinter dem Tretlagerund vor dem Hinterrad montiert wird, benötigen daher die werkseitige Ausrüstung des Fahrradrahmens nicht, die den Fahrradrahmen für die Anbringung eines Hinterradständers vorbereitet. In solchen Fällen werden die rahmenseitigen Befestigungssockel häufig als ästhetisch störend empfunden.

Der Neuerung liegt die Aufgabe zugrunde, eine gattungsgemäße Fahrradständeranordnung dahingehend zu verbessern, dass diese eine optisch unauffällige Ausgestaltung des Fahrradrahmens im Falle eines nicht montierten Hinterradständers ermöglicht. Weiterhin liegt der Neuerung die Aufgabe zugrunde, einen Fahrradständer anzugeben, der für eine derartige Fahrradständeranordnung besonders geeignet ist.

Diese Aufgabe wird durch eine Fahrradständeranordnung nach Anspruch 1 gelöst sowie durch einen Fahrradständer nach Anspruch 12 oder 13. Vorteilhafte Ausgestaltungen sind in den Unteransprüchen beschrieben.

Die Neuerung schlägt mit anderen Worten eine Befestigungsgeometrie vor, die zwei Stutzen in Art von Stiften aufweist, wobei diese beiden Stutzen in zwei damit zusammenwirkenden Taschen aufgenommen werden. Dadurch ergibt sich um jeden Stutzen herum eine ringförmige Kontaktlinie und somit auf sehr kleiner Grundfläche eine optimal lange Kontaktlinie. Während die lange Kontaktlinie vorteilhaft für einen möglichst spielfreien und sicheren Sitz des Ständerkopfes am Fahrradrahmen ist, bedeutet die geringe Grundfläche eine optisch möglichst unauffällige Ausgestaltung des Befestigungssockels. Im Ergebnis ist die Befestigungsgeometrie des Fahrradrahmens auf diese Weise optisch unauffällig, wenn kein Hinterradständer montiert ist.

Dabei kann vorgesehen sein, sowohl am Fahrradrahmen als auch am Ständerkopf jeweils einen Stutzen und eine Tasche anzuordnen. Vorteilhaft jedoch kann vorgesehen sein, dass beide Stutzen an demselben Bauteil - entweder am Fahrradrahmen oder am Ständerkopf - angeordnet sind und dementsprechend die beiden Taschen, die dazu dienen, die Stutzen aufzunehmen, an dem komplementären zweiten Bauteil angeordnet sind. Hierdurch wird einerseits die Fertigung des betreffenden Bauteils vereinfacht und andererseits die Gefahr von Fehlstellungen der beiden Stutzen zueinander minimiert.

Vorteilhaft können die beiden Stutzen am Fahrradrahmen angeordnet sein. Die Stutzen weisen das Innengewinde für die Befestigungsschrauben auf, und da sie mit dem Fahrradrahmen verschweißt werden können, kann eine stabile Festlegung des Fahrradständers am Fahrradrahmen durch die vergleichsweise lange Führung der Befestigungsschrauben in den Stutzen sichergestellt werden. Dementsprechend sind die Taschen im Ständerkopf vorgesehen, und auch dies ist fertigungstechnisch vorteilhaft, da der Ständerkopf in diesem Fall problemlos als werkzeugfallendes, nachbearbeitungsfreies Gussteil und dementsprechend wirtschaftlich hergestellt werden kann.

Wenn die beiden Stutzen wie oben erwähnt rahmenseitig angeordnet sind, können Sie in einer Ausgestaltung an einer Kettenstrebe des Fahrradrahmens angeordnet sein, also an der im Wesentlichen horizontal verlaufenden Rahmenstrebe, die vom Tretlager zur Hinterradnabe verläuft. Auf diese Weise kann ein Abstand zur Hinterrad-Achsaufnahme ermöglicht werden, der eine Kollision mit Schaltungs-, Brems- oder Antriebskomponenten wie z.B. einem Elektromotor zu vermeiden hilft. Außerdem kann so der Abstand des Fahrradständers vom Tretlager in weiten Maßen frei gewählt werden, so dass z. B. ein geringer Abstand vom Tretlager gewählt werden kann, wenn z. B. durch einen Antriebsmotor und einen dem Antriebsmotor zugeordneten Energiespeicher der Schwerpunkt des Fahrrads nahe oder sogar vor dem Tretlager liegt und es für einen sicheren Stand des Fahrrads vorteilhaft ist, den Fahrradständer dementsprechend weit vorn zu montieren.

In einer anderen Ausgestaltung können die beiden rahmenseitigen Stutzen an einem Ausfallende des Fahrradrahmens angeordnet sein. Die Ausfallenden werden üblicherweise ohnehin als separate Bauteile bereitgestellt, die mit den Rahmenstreben verbunden werden, beispielsweise verschweißt oder verlötet werden. Die Ausfallenden stellen dabei Bauteile mit einer hohen Integrationsdichte dar, die auf vergleichsweise kleinem Bauraum eine Vielzahl von Funktionen aufweisen, nämlich jedenfalls die erwähnte Achsaufnahme, und zusätzlich beispielsweise Einrichtungen zum Kettenspannen, Anschlüsse für die Haltestreben vom Hinterrad-Schutzblech und ggf. auch von einem Gepäckträger. Wenn die Ausgestaltung der Hinterradnabe dies ermöglicht, kann es daher vorteilhaft sein, die rahmenseitigen Stutzen auch noch im Ausfallende unterzubringen, da dies in der ohnehin komplexen Geometrie des als Sonderbauteil herzustellenden Ausfallendes berücksichtigt werden kann und im Gegenzug eine zusätzliche Bearbeitung von Rahmenstreben wie z.B. der erwähnten Kettenstrebe zur Schaffung der Befestigungsgeometrie entfallen kann. Auch unter optischen Gesichtspunkten ist die Anordnung der beiden Stutzen im Ausfallende vorteilhaft, da die Kettenstrebe frei von der Befestigungsgeometrie bleiben kann.

Insbesondere kann vorteilhaft vorgesehen sein, die rahmenseitigen Elemente der Befestigungsgeometrie auf der Innenseite des Fahrradrahmens anzuordnen, also auf der zum Hinterrad gerichteten Seite einer Kettenstrebe, eines Ausfallendes oder ähnlichen Rahmenbauteils. Auf diese Weise bleibt die Anordnung der Befestigungsgeometrie für den optischen Eindruck des Fahrrads praktisch unsichtbar, da die rahmenseitige Befestigungsgeometrie nach außen durch die entsprechenden Rahmenelemente des Fahrradrahmens verdeckt ist.

Grundsätzlich können die Stutzen und die Taschen praktisch beliebige Querschnittsformen aufweisen, beispielsweise quadratische oder polygonale Querschnitte. Besonders vorteilhaft jedoch können sowohl die Stutzen als auch die Taschen jeweils kreisrunde Querschnitte aufweisen, so dass beispielsweise die Montage der Stutzen an dem jeweiligen Bauteil, z.B. am Fahrradrahmen, vereinfacht wird, da Fehlstellungen um deren Längsachse ausgeschlossen sind. Außerdem sind sowohl die Stutzen als auch die Taschen auf einfache Weise herstellbar. Beispielsweise sind die Stutzen in Form von Stangenmaterial wirtschaftlich als Halbzeug erhältlich und die Taschen können als Bohrungen erzeugt werden oder sind, falls sie in einem werkzeugfallenden Bauteil vorgesehen sind, mit einer vergleichsweise unkomplizierten und dementsprechend preisgünstig zu verwirklichenden Geometrie des betreffenden Werkzeugs herstellbar.

Die Stutzen erstrecken sich von ihrem jeweiligen Bauteil, an dem sie befestigt sind, bis zu ihrem so genannten freien Ende, welches am weitesten von dem Bauteil beabstandet ist. In einer Ausgestaltung kann ein Stutzen ein stumpfes freies Ende aufweisen, welches dementsprechend quer zur Längsachse des Stutzens verläuft. Hierdurch wird eine preisgünstige Herstellung der Stutzen unterstützt, da beispielsweise das erwähnte Halbzeug in Form von Stangenmaterial einfach quer zur Längsachse der Stange durchtrennt wird, um die Stutzen zu erzeugen.

Um einen spielfreien Sitz des Stutzens in der zugeordneten Tasche sicherzustellen, müssten der Außendurchmesser des Stutzens und der Innendurchmesser der Tasche exakt aufeinander abgestimmt sein. Dies ist in der Praxis allein schon aufgrund der Lackierung, die fertigungsbedingte Schichtdickentoleranzen aufweisen kann, praktisch nicht zu gewährleisten. Hinzu kommt, dass beide Stutzen und dementsprechend auch beide Taschen jeweils in einem präzisen Abstand zueinander angeordnet sein müssten und dass die Stutzen präzise ausgerichtet sein müssen, beispielsweise perfekt achsparallel zueinander, damit die vorgesehene Aufnahme beider Stutzen in den beiden Taschen gewährleistet werden kann. In der Praxis kommt es erfahrungsgemäß zu Abweichungen von diesen idealisierten Zuständen.

Falls ein Stutzen ein stumpfes freies Ende aufweist, kann die dem Stutzen zugeordnete Tasche vorteilhaft konisch ausgestaltet sein, um die beschriebenen, in der Praxis auftretenden Toleranzen auszugleichen. Zudem erleichtert eine konische Ausgestaltung der Tasche die Herstellung des betreffenden Bauteils als Gussbauteil, da die Entnehmbarkeit aus der Gießform vereinfacht wird. Die konische Tasche weist an ihrer Mündung einen Durchmesser auf, der größer ist als der Außendurchmesser des Stutzens, so dass Stutzen mit geringfügig unterschiedlichen Au-βendurchmessern und auch mit geringfügigen Fehlstellungen zuverlässig in der Tasche aufgenommen werden können. Hinzu kommt weiterhin vorteilhaft, dass der Kontakt zwischen Stutzen und Tasche, in Form einer als geschlossener Ring umlaufenden Linie, als besonders schmale Linie mit dementsprechend hohen Flächenpressungen erfolgt, so dass ein besonders fester und spielfreier Sitz des Ständerkopfes am Fahrradrahmen unterstützt wird. Angesichts der Länge, welche die Stütze des Spenders aufweist, wirken im Fahrbetrieb, insbesondere auf unebenem Untergrund, vergleichsweise große Hebelkräfte auf den Ständerkopf ein, welche die Befestigung des Spenders am Fahrradrahmen zu lösen bestrebt sind. Die hohen Flächenpressungen können in diesem Zusammenhang eine besonders zuverlässige Befestigung des Ständerkopfes am Fahrradrahmen sicherstellen.

In Umkehr der oben beschriebenen Verhältnisse kann in einer anderen Ausgestaltung vorgesehen sein, dass ein Stutzen ein konisches freies Ende aufweist. In diesem Fall weist die diesem Stutzen zugeordnete Tasche einen geringeren Querschnitt auf als der Stutzen. Auf diese Weise ist sichergestellt, dass beim Eintauchen des Stutzens in die Tasche ein ringlinienförmiger Kontakt zwischen der konischen Fläche des Stutzens und dem Rand der Tasche geschaffen wird. Je nachdem, wie die Kante der Tasche ausgestaltet ist, kann diese Ringlinie sehr schmal bemessen sein und somit ebenfalls die oben beschriebenen hohen Flächenpressungen ermöglichen.

In einer anderen Ausgestaltung kann vorgesehen sein, dass sowohl das freie Ende eines Stutzens konisch ausgestaltet ist als auch die dem Stutzen zugeordnete Tasche ebenfalls konisch ausgestaltet ist, um auf diese Weise in besonderem Maße den erwähnten Toleranzausgleich zu ermöglichen. Die Kontaktflächen ergeben sich in diesem Fall als vergleichsweise breite Ringlinien mit dementsprechend geringeren Flächenpressungen, so dass eine unerwünschte Verformung vermieden wird, wie sie ansonsten nicht auszuschließen ist, wenn eine scharfe Kante - z. B. des Stutzens - an einer glatten gegenüberliegenden Fläche - z. B. einer konischen Bohrung - anliegt und dabei hohe Flächenpressungen auftreten. Da die unerwünschte Verformung zu einer vorzeitigen Lockerung des Fahrradständers führen kann, kann durch die komplementäre konische Ausgestaltung sowohl des Stutzens als auch der Tasche eine zuverlässige Befestigung des Fahrradständers am Fahrradrahmen erreicht werden.

Die Zuverlässigkeit der Befestigung kann z. B. anhand der Zykluszahl beurteilt werden, also der Anzahl von Betätigungen, bei denen der Fahrradständer aus seiner Fahrstellung in seine Standstellung und wieder zurück bewegt wird. In der Fahrstellung ist die Stütze des Fahrradständers angehoben und verläuft beispielsweise im Wesentlichen parallel zu einer Kettenstrebe des Fahrradrahmens. In der Standstellung hingegen ist die Stütze von dieser Kettenstrebe nach unten abgewinkelt und kann dazu genutzt werden, das Fahrrad auf dem Untergrund abzustützen.

In einer Ausgestaltung kann die Zuverlässigkeit der Befestigung auch dadurch verbessert und eine hohe Zykluszahl erreicht werden, dass zur Befestigung des Ständerkopfes am Fahrradrahmen Senkkopfschrauben verwendet werden. Die vergleichsweise großflächige Anlage des Schraubenkopfes vermeidet ebenfalls die oben erwähnten unerwünschten Verformungen und eine daraus resultierende Lockerung der Schraubverbindung. Durch die so erreichbare hohe Zuverlässigkeit der Schraubbefestigung kann eine optisch unauffällige Befestigung des Fahrradständers am Fahrradrahmen unterstützt werden, denn erstens können vergleichsweise kleine Schrauben verwendet werden und zweitens können die Schraubenköpfe bündig in ihre Umgebung versenkt werden, schaffen also keinen sichtbaren Überstand, sondern ermöglichen eine glatte, bündige Außenkontur an dem sie aufnehmenden Bauteil.

Vorteilhaft sind die Einsenkungen, die zur Aufnahme der Schraubenköpfe bestimmt sind, im Ständerkopf des Fahrradständers angeordnet

Die Befestigung des Fahrradständers am Fahrradrahmen kann in an sich bekannter Weise mithilfe von Befestigungsschrauben erfolgen. Beispielsweise kann eine einzige Befestigungsschraube verwendet werden, wobei die vorschlagsgemäße Befestigungsgeometrie trotz einer derartigen einzelnen Verschraubung eine Verdrehsicherung für den Fahrradständer gegenüber dem Fahrradrahmen gewährleistet. Die Verwendung von zwei oder mehr Befestigungsschrauben ermöglicht vorteilhaft einen besonders sicheren und spielfreien Sitz des Ständerkopfes am Fahrradrahmen durch einen besonders gleichmäßigen Anpressdruck. Insbesondere wenn die Befestigungsgeometrie in ein Ausfallende integriert ist, kann die Befestigungsschraube außerhalb der beschriebenen Befestigungsgeometrie vorgesehen sein, so dass die beiden Stutzen und die zugehörigen Taschen auf engem Raum angeordnet werden können.

In einer besonders vorteilhaften Ausgestaltung kann vorgesehen sein, dass die Stutzen und die Taschen jeweils mit Bohrungen versehen sind, die dazu bestimmt sind, jeweils eine Befestigungsschraube aufzunehmen. Da sich bei dieser Ausgestaltung die Befestigungsschrauben in die Stutzen und die Taschen erstrecken, kann die erforderliche Grundfläche möglichst gering gehalten werden, da nicht neben der Befestigungsgeometrie noch weiterer Bauraum beansprucht wird, um beispielsweise Gewindebohrungen für Befestigungsschrauben bereitzustellen. Eine optisch möglichst unauffällige Ausgestaltung der vorschlagsgemäßen Anordnung wird auf diese Weise ebenso unterstützt wie die Möglichkeit, die vorschlagsgemäße Anordnung auch an einem ohnehin hoch integrierten Bauteil wie einem Ausfallende zu verwirklichen. Zudem ergibt sich eine optimale Kräfte- bzw. Druckverteilung zwischen den Stutzen und den Taschen, was einen optimal festen und spielfreien Sitz des Fahrradständers am Fahrradrahmen unterstützt.

Wenn die Stutzen am Fahrradrahmen angeordnet sind, können sie in einer Ausgestaltung nach unten weisend ausgerichtet sein, beispielsweise können sie an den unteren Umfang eines Ausfallendes angeformt sein, oder sie können als separate Elemente von unten in eine Kettenstrebe eingesetzt sein. Die Vorteile dieser Ausgestaltung kommen insbesondere dann zur Geltung, solange kein Fahrradständer am Fahrrad montiert ist: durch die Ausrichtung nach unten werden erstens seitlich nach außen ragende Vorsprünge am Fahrrad vermieden, was im Sinne der Sicherheit vorteilhaft ist, und zweitens sind die Stutzen optisch besonders unauffällig und beispielsweise unterhalb der Kettenstrebe praktisch kaum sichtbar.

Zur Schaffung einer vorschlagsgemäßen Fahrradständeranordnung kann ein Fahrradständer verwendet werden, der sich von herkömmlichen Fahrradständern mit zwei Bohrungen im Ständerkopf dadurch unterscheidet, dass der Ständerkopf entweder zwei konische Bohrungen als Taschen für die vorschlagsgemäße Befestigungsgeometrie aufweist, oder dass der Ständerkopf zwei Stutzen zur Herstellung der vorschlagsgemäßen Befestigungsgeometrie aufweist.

Ein Ausführungsbeispiel der Neuerung wird anhand der rein schematischen Darstellungen nachfolgend näher erläutert dabei zeigt
- Fig. 1: eine perspektivische Ansicht auf den Bereich des Hinterrades eines Fahrrads, mit einigen Bestandteilen des Fahrradrahmens und mit einem Fahrradständer,
- Fig. 2: eine perspektivische Ansicht ähnlich Fig. 1, jedoch in größerem Maßstab und ohne den Ständerkopf des Fahrradständers,
- Fig. 3: eine perspektivische Ansicht auf den Fahrradständer im Bereich seines Ständerkopfes, von der zum Fahrradrahmen gerichteten Seite aus, und
- Fig. 4: eine Ansicht ähnlich Fig. 3, aus einer etwas anderen Perspektive und mit in den Ständerkopf eingezeichneten Linien, welche Ausnehmungen innerhalb des Ständerkopfes zeigen.

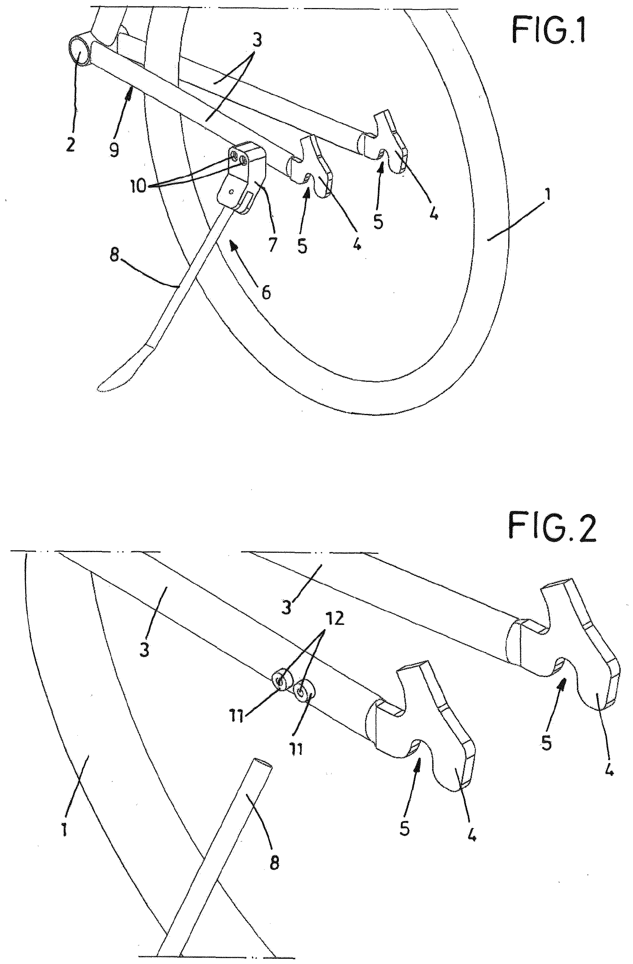

In Fig. 1 ist ein Hinterrad 1 eines Fahrrads schematisch dargestellt, wobei ein Fahrradrahmen insgesamt mit 9 bezeichnet und lediglich teilweise dargestellt ist. Der Fahrradrahmen 9 weist ein Tretlager 2 auf, von dem aus sich zwei Kettenstreben 3 jeweils bis zu einem Ausfallende 4 erstrecken, wobei jedes Ausfallende 4 eine Achsaufnahme 5 für die Nabe des Hinterrades 1 aufweist. An der im Bild vorderen Kettenstrebe 3 ist ein Fahrradständer 6 montiert, der einen Ständerkopf 7 und eine daran schwenkbar gelagerte Stütze 8 aufweist. Der Fahrradständer 6 ist mithilfe zweier Befestigungsschrauben 10 an der Kettenstrebe 3 lösbar befestigt.

Fig. 2 zeigt - quasi nach "Demontage" des Ständerkopfes 7, dass an der Kettenstrebe 3 zwei Stutzen 11 vorhanden sind, die sich nicht nach innen, zum Hinterrad 1 hin, sondern nach außen erstrecken und jeweils eine Gewindebohrung 12 aufweisen. Die Stutzen 11 sind zylindrisch ausgestaltet und weisen jeweils ein stumpfes freies Ende auf. Sie ragen zudem unterschiedlich weit aus der Kettenstrebe 3 heraus, so dass ihre beiden freien Enden in einer vorbestimmten Ebene liegen. Diese Ebene stellt bei der Montage eines Fahrradständers 6 sicher, dass die Stütze 8 in der Fahrstellung in Längsrichtung des Fahrrads verläuft, ohne beispielsweise mit dem Hinterrad zu kollidieren oder störend weit nach außen zu ragen. Weiterhin ermöglicht diese Ebene, dass die in die Standstellung ausgeklappte Stütze 8 so ausgerichtet ist, dass der Aufstandspunkt ihres Fußes einen sicheren Stand des Fahrrads gewährleistet.

Abweichend von dem in Fig. 2 dargestellten Ausführungsbeispiel können die Enden der Stutzen 11 nicht stumpf, sondern konisch ausgestaltet sein, so dass sich die Stutzen 11 zu ihrem jeweiligen freien Ende verjüngen.

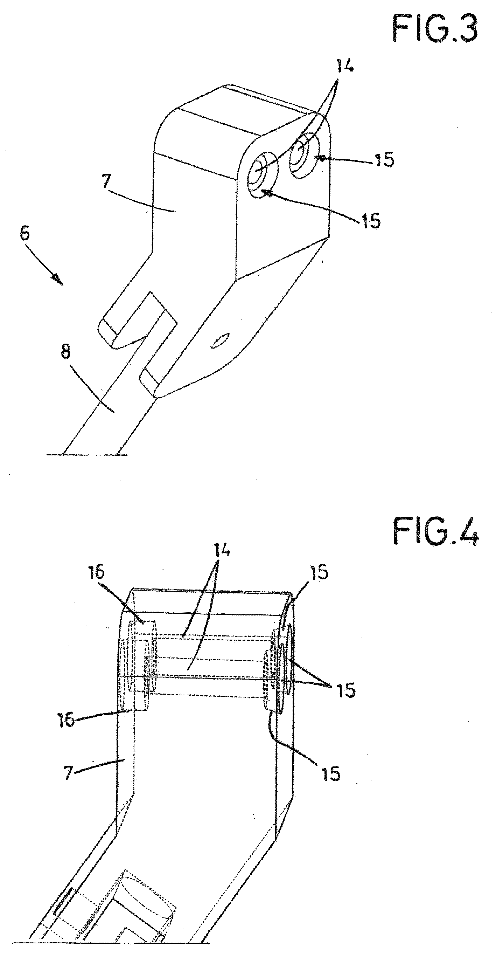

Fig. 3 zeigt den Fahrradständer 6 von der zum Fahrradrahmen 9 gerichteten Seite. Dabei ist ersichtlich, dass im Ständerkopf 7 Durchgangsbohrungen 14 zur Aufnahme der Befestigungsschrauben 10 verlaufen und sich diese Durchgangsbohrungen 14 zu Taschen 15 erweitern, die zur Aufnahme der rahmenseitigen Stutzen 11 dienen.

Wenn die Enden der Stutzen 11 nicht stumpf, sondern konisch ausgestaltet sind, entspricht deren Konizität der Konizität der Taschen 15, so dass die Stutzen 11 die Taschen 15 großflächig kontaktieren.

Fig. 4 zeigt den Ständerkopf 7 im Vergleich zu Fig. 3 in einem größeren Maßstab. Zudem sind gestrichelt Linien in den Ständerkopf 7 eingezeichnet, welche Ausnehmungen innerhalb des Ständerkopfes 7 erkennbar machen, beispielsweise die Durchgangsbohrungen 14 und die Taschen 15. Dabei sind die Taschen 15 sowohl an ihren Mündungsöffnungen als auch an ihrem konisch verlaufenden Mantelflächen jeweils mit 15 gekennzeichnet. An der Außenseite des Ständerkopfes 7 erweitern sich die Durchgangsbohrungen 14 zu Einsenkungen 16, die zur Aufnahme der Schraubenköpfe der Befestigungsschrauben 10 dienen.

Abweichend von dem in Fig. 4 dargestellten Ausführungsbeispiel können die Einsenkungen 16 nicht zylindrisch, sondern konisch ausgestaltet sein, mit derselben Konizität, wie sie die Schraubenköpfe aufweisen, so dass sie nicht nur die bündige Aufnahme der Schraubenköpfe von Senkkopfschrauben im Ständerkopf 7 ermöglichen, sondern dabei auch jeweils eine große Kontaktfläche schaffen, wo der jeweilige Schraubenkopf der Einsenkung 16 anliegt.

### Bezugszeichen:

- 1: Hinterrad
- 2: Tretlager
- 3: Kettenstrebe
- 4: Ausfallende
- 5: Achsaufnahme
- 6: Fahrradständer
- 7: Ständerkopf
- 8: Stütze
- 9: Fahrradrahmen
- 10: Befestigungsschraube
- 11: Stutzen
- 12: Gewindebohrung
- 14: Durchgangsbohrung
- 15: Tasche
- 16: Einsenkung

## Patentansprüche

1. Fahrradständeranordnung, bestehend aus einem Fahrradrahmen (9), einem Fahrradständer (6), einem Befestigungssockel der als integraler Teil des Fahrradrahmens (9) ausgestaltet und im Bereich des Hinterrades (1) am Fahrradrahmen (9) angeordnet ist, wobei der Fahrradständer (6) einen am Befestigungssockel mithilfe von Befestigungsschrauben (10) lösbar festgelegten Ständerkopf (7) aufweist, sowie eine am Ständerkopf (7) schwenkbar gehaltene Stütze (8),
die zwischen zwei als Standstellung und als Fahrstellung bezeichneten Endstellungen beweglich ist,
wobei der Befestigungssockel und der Ständerkopf (7) zwei komplementäre Komponenten einer den Fahrradständer (6) verdrehsicher am Fahrradrahmen (9) festlegenden Befestigungsgeometrie bilden,
**dadurch gekennzeichnet,**
**dass** die Befestigungsgeometrie einerseits zwei stiftförmige Stutzen (11) aufweist, und andererseits zwei Taschen (15), in denen die Stutzen (11) aufgenommen sind.

2. Fahrradständeranordnung nach Anspruch 1,
**dadurch gekennzeichnet,**
**dass** beide Stutzen (11) an demselben Bauteil angeordnet sind und die beiden Taschen (15) an dem dazu komplementären zweiten Bauteil.

3. Fahrradständeranordnung nach Anspruch 2,
**dadurch gekennzeichnet,**
**dass** die beiden Stutzen (11) am Fahrradrahmen (9) angeordnet sind.

4. Fahrradständeranordnung nach Anspruch 3,
**dadurch gekennzeichnet,**
**dass** die beiden Stutzen (11) an einer Kettenstrebe (3) des Fahrradrahmens (9) angeordnet sind.

5. Fahrradständeranordnung nach Anspruch 3,
**dadurch gekennzeichnet,**
**dass** die beiden Stutzen (11) an einem Ausfallende (4) des Fahrradrahmens (9) angeordnet sind.

6. Fahrradständeranordnung nach einem der vorhergehenden Ansprüche,
**dadurch gekennzeichnet,**
**dass** die Elemente der Befestigungsgeometrie, die am Fahrradrahmen (9) angeordnet sind, auf der zum Hinterrad (1) weisenden Innenseite des Fahrradrahmens (9) angeordnet sind.

7. Fahrradständeranordnung nach einem der vorhergehenden Ansprüche,
**dadurch gekennzeichnet,**
**dass** die Stutzen (11) und die Taschen (15) kreisrunde Querschnitte aufweisen.

8. Fahrradständeranordnung nach einem der vorhergehenden Ansprüche,
**dadurch gekennzeichnet,**
**dass** ein Stutzen (11) ein stumpfes freies Ende aufweist und die dem Stutzen (11) zugeordnete Tasche (15) konisch ausgestaltet ist, wobei der Querschnitt der Tasche (15) an ihrer Mündung größer ist als der Querschnitt des Stutzens (11).

9. Fahrradständeranordnung nach einem der Ansprüche 1 bis 7,
**dadurch gekennzeichnet,**
**dass** ein Stutzen (11) ein konisches freies Ende aufweist und die dem Stutzen (11) zugeordnete Tasche (15) einen geringeren Querschnitt aufweist als der Stutzen (11).

10. Fahrradständeranordnung nach einem der Ansprüche 1 bis 7,
**dadurch gekennzeichnet,**
**dass** ein Stutzen (11) ein konisches freies Ende aufweist und die dem Stutzen (11) zugeordnete Tasche (15) ebenfalls konisch ausgestaltet ist.

11. Fahrradständeranordnung nach einem der vorhergehenden Ansprüche,
**dadurch gekennzeichnet,**
**dass** die Stutzen (11) und die Taschen (15) jeweils mit Bohrungen versehen sind, die dazu bestimmt sind, eine Befestigungsschraube (10) aufzunehmen.

12. Fahrradständer (6),
mit einem an einem Fahrradrahmen (9) lösbar festlegbaren Ständerkopf (7), der zwei Bohrungen zur Aufnahme von Befestigungsschrauben (10) aufweist,
und mit einer am Ständerkopf (7) schwenkbar gehaltenen Stütze (8),
die zwischen zwei als Standstellung und als Fahrstellung bezeichneten Endstellungen beweglich ist,
**dadurch gekennzeichnet,**
**dass** der Ständerkopf (7) zwei konische Bohrungen als Taschen (15) aufweist, die dazu bestimmt sind, zur Befestigung des Fahrradständers (6) am Fahrradrahmen (9) zwei am Fahrradrahmen (9) angeordnete Stutzen (11) aufzunehmen.

13. Fahrradständer (6),
mit einem an einem Fahrradrahmen (9) lösbar festlegbaren Ständerkopf (7), der zwei Bohrungen zur Aufnahme von Befestigungsschrauben (10) aufweist,
und mit einer am Ständerkopf schwenkbar gehaltenen Stütze (8),
die zwischen zwei als Standstellung und als Fahrstellung bezeichneten Endstellungen beweglich ist,
**dadurch gekennzeichnet,**
**dass** der Ständerkopf (7) zwei Stutzen (11) aufweist, die dazu bestimmt sind, zur Befestigung des Fahrradständers (6) am Fahrradrahmen (9) sich in zwei im Fahrradrahmen (9) angeordnete Taschen (15) zu erstrecken.

14. Fahrradständer (6) nach Anspruch 12 oder 13,
**dadurch gekennzeichnet,**
**dass** der Fahrradständer (6) dazu bestimmt ist, eine Fahrradständeranordnung nach einem der Ansprüche 1 bis 11 zu schaffen.

## Claims

1. Bicycle stand assembly comprising a bicycle frame (9), a bicycle stand, a mounting bracket that is designed as an integral part of the bicycle frame (9) and is arranged on the bicycle frame (9) in the area of the rear wheel (1), where the bicycle stand incorporates a stand head (7) that is detachably fixed to the mounting bracket by means of fixing screws (10) and incorporates a prop (8) that is retained pivotably on the stand head (7) and can be moved between two end positions that are described as the stand position and the travel position, where the mounting bracket and the stand head (7) form two complementary components of a mounting geometry that mounts the bicycle stand (6) torsion-freely on the bicycle frame (9), **characterised in that** the mounting geometry incorporates, on the one hand, two stud-shaped bosses (11), and, on the other, two recesses (15) to into which the bosses (11) fit.

2. Bicycle stand assembly in accordance with claim 1, **characterised in that** two bosses (11) are arranged on the same component part and the two recesses (15) on the second component part that is complementary to them.

3. Bicycle stand assembly in accordance with claim 2, **characterised in that** the two bosses (11) are arranged on the bicycle frame.

4. Bicycle stand assembly in accordance with claim 3, **characterised in that** the two bosses (11) are arranged on a chainstay (3) on the bicycle frame (9).

5. Bicycle stand assembly in accordance with claim 3, **characterised in that** the two bosses (11) are arranged on the drop-out (4) of the bicycle frame (9).

6. Bicycle stand assembly in accordance with any one of the foregoing claims, **characterised in that** the elements of the mounting geometry that are arranged on the bicycle frame (9) are arranged on the inner side of the bicycle frame (9) that is oriented towards the rear wheel (1).

7. Bicycle stand assembly in accordance with any one of the foregoing claims, **characterised in that** the bosses (11) and the recesses (15) have a circular cross-section.

8. Bicycle stand assembly in accordance with any one of the foregoing claims, **characterised in that** a boss (11) has a blunt, free end and the recess (15) that is assigned to the boss (11) is designed tapered, where the cross-section of the recess (15) at its mouth is larger than the cross-section of the boss (11).

9. Bicycle stand assembly in accordance with any one of claims 1 to 7, **characterised in that** a boss (11) has a tapered free end and the recess (15) that is assigned to the boss (11) has a smaller cross-section than the boss (11).

10. Bicycle stand assembly in accordance with any one of claims 1 to 7, **characterised in that** a recess (11) has a tapered free end and the recess (15) that is assigned to the boss (11) is likewise designed tapered.

11. Bicycle stand assembly in accordance with any one of the foregoing claims, **characterised in that** the boss (11) and the recesses (15) are each provided with drilled holes that are designed to receive a fixing screw (10).

12. Bicycle stand (6), having a stand head (7) that can be detachably fixed to a bicycle frame (9) and incorporates two drilled holes to receive fixing screws (10) and having a prop (8) that is retained pivotably on the stand head (7) and can be moved between two end positions that are described as the stand position and the travel position, **characterised in that** the stand head (7) incorporates as recesses (15) two tapered drilled holes that are designed to receive two bosses (11) arranged on the bicycle frame (9) to mount the bicycle stand (6) to the bicycle frame (9).

13. Bicycle stand (6), having a stand head (7) that is detachably fixed to a bicycle frame (9) and incorporates two drilled holes to receive fixing screws (10) and having a prop (8) that is retained pivotably on the stand head and can be moved between two end positions that are described as the stand position and the travel position, **characterised in that** the stand head (7) incorporates two bosses (11) that are designed to fit into two recesses (15) arranged in the bicycle frame (9) to mount the bicycle stand (6) to the bicycle frame (9).

14. Bicycle stand (6) in accordance with claim 12 or 13, **characterised in that** the bicycle stand (6) is designed to form a bicycle stand assembly in accordance with any one of claims 1 to 11.

## Revendications

1. Agencement de béquille de bicyclette, comprenant un cadre arrière (9) de bicyclette, une béquille (6) de bicyclette, un socle de fixation configuré de sorte à faire partie intégrante du cadre arrière (9) de bicyclette et disposé dans la zone de la roue arrière (1) contre le cadre arrière (9) de bicyclette, sachant que la béquille de bicyclette présente une tête (7) de béquille fixée de manière détachable contre le socle de fixation à l'aide de vis de fixation (10), ainsi qu'une jambe d'appui (8) maintenue pivotante contre la tête (7) de béquille, jambe d'appui qui est déplaçable entre deux positions finales respectivement appelées position d'immobilité et position de conduite, sachant que le socle de fixation et la tête (7) de béquille forment deux composants complémentaires d'une géométrie de fixation immobilisant la béquille (6) de bicyclette contre le cadre arrière (9) de bicyclette de sorte à l'empêcher de tourner, **caractérisé en ce que** la géométrie de fixation présente d'une part deux embouts (11) en forme de tiges, et d'autre part deux poches (15) dans lesquelles sont reçus les embouts (11).

2. Agencement de béquille de bicyclette selon la revendication 1, **caractérisé en ce que** les deux embouts (11) sont disposés contre la même pièce et que les deux poches (15) sont disposées contre la seconde pièce complémentaire de la première.

3. Agencement de béquille de bicyclette selon la revendication 2, **caractérisé en ce que** les deux embouts (11) sont disposés contre le cadre arrière (9) de bicyclette.

4. Agencement de béquille de bicyclette selon la revendication 3, **caractérisé en ce que** les deux embouts (11) sont disposés contre une base (3) du cadre arrière (9) de bicyclette.

5. Agencement de béquille de bicyclette selon la revendication 3, **caractérisé en ce que** les deux embouts (11) sont disposés contre une extrémité (4) du cadre arrière (9) de bicyclette.

6. Agencement de béquille de bicyclette selon l'une des revendications précédentes, **caractérisé en ce que** les éléments de la géométrie de fixation, disposés contre le cadre arrière (9) de bicyclette, sont disposés sur le côté intérieur du cadre arrière (9) de bicyclette regardant vers la roue arrière (1).

7. Agencement de béquille de bicyclette selon l'une des revendications précédentes, **caractérisé en ce que** les embouts (11) et les poches (15) présentent des sections circulaires.

8. Agencement de béquille de bicyclette selon l'une des revendications précédentes, **caractérisé en ce qu'**un embout (11) présente une extrémité libre à angles non vifs et que la poche (15) affectée à cet embout (11) est configurée conique, sachant que la section de la poche (15) est plus grande, au niveau de son orifice, que la section de l'embout (11).

9. Agencement de béquille de bicyclette selon l'une des revendications 1 à 7, **caractérisé en ce qu'**un embout (11) présente une extrémité libre conique et que la poche (15) affectée à cet embout (11) présente une section plus petite que l'embout (11).

10. Agencement de béquille de bicyclette selon l'une des revendications 1 à 7, **caractérisé en ce qu'**un embout (11) présente une extrémité libre conique et que la poche (15) affectée à cet embout (11) est également configurée conique.

11. Agencement de béquille de bicyclette selon l'une des revendications précédentes, **caractérisé en ce que** les embouts (11) et les poches (15) sont respectivement munis d'alésages destinés à recevoir une vis de fixation (10).

12. Béquille (6) de bicyclette, comprenant une tête (7) de béquille fixable de manière détachable contre un cadre arrière (9) de bicyclette, tête qui présente deux alésages destinés à recevoir des vis de fixation (10), et comprenant une jambe d'appui (8) maintenue pivotante contre la tête (7) de béquille, jambe d'appui qui est déplaçable entre deux positions finales respectivement appelées position d'immobilité et position de conduite, **caractérisée en ce que** la tête (7) de béquille présente deux alésages coniques en forme de poches (15) destinées à recevoir - dans le but de fixer la béquille (6) de bicyclette contre le cadre arrière (9) de bicyclette - deux embouts (11) disposés contre le cadre arrière (9) de bicyclette.

13. Béquille (6) de bicyclette, comprenant une tête (7) de béquille fixable de manière détachable contre un cadre arrière (9) de bicyclette, tête qui présente deux alésages destinés à recevoir des vis de fixation (10), et comprenant une jambe d'appui (8) maintenue pivotante contre la tête de béquille, jambe d'appui qui est déplaçable entre deux positions finales respectivement appelées position d'immobilité et position de conduite, **caractérisée en ce que** la tête (7) de béquille présente deux embouts (11) destinés à s'étendre - dans le but de fixer la béquille (6) de bicyclette contre le cadre arrière (9) de bicyclette - dans deux poches (15) disposées dans le cadre arrière (9) de bicyclette.

14. Béquille (6) de bicyclette selon la revendication 12 ou 13, **caractérisée en ce que** la béquille (6) de bicyclette est destinée à créer un agencement de béquille de bicyclette selon l'une des revendications 1 à 11.
